# FASCICULE DE BREVET EUROPEEN

(11) **EP 2 531 687 B1**
(45) Date de publication et mention de la délivrance du brevet: **28.03.2018**
(21) Numéro de dépôt: 11705923.8
(22) Date de dépôt: 24.01.2011
(51) Int. Cl.: E06B 3/66

(54) **VITRAGE MULTIPLE LUMINEUX A DIODES ELECTROLUMINESCENTES**
MEHRFACH AUFLEUCHTENDE GLASPLATTEN MIT LEUCHTDIODEN
MULTIPLE FLASHING GLASS PANELS HAVING LIGHT-EMITTING DIODES

(30) Priorité: 01.02.2010 FR 1050669
(43) Date de publication de la demande: 12.12.2012
(73) Titulaire: Saint-Gobain Glass France, 92400 Courbevoie (FR)
(72) Inventeur: MONTGERMONT, Aude, F-75009 Paris (FR); ZHANG, Jingwei, F-91300 Massy (FR); DELHORME, David, F-02700 Vouël (FR)
(74) Mandataire: Saint-Gobain Recherche
(86) Numéro de dépôt international: PCT/FR2011/050128
(87) Numéro de publication internationale: WO 2011/092421

(56) Documents cités:
- DE-A1- 10 322 561
- US-A- 5 459 955
- US-A- 6 026 602

## Description

La présente invention est relative à un vitrage multiple lumineux et plus particulièrement relative à un vitrage multiple lumineux à diodes électroluminescentes.

Les diodes électroluminescentes ou DEL (LED en anglais) ont à l'origine été employées pour constituer des lampes témoins ou voyants lumineux d'appareils électriques et électroniques, et assurent depuis déjà quelques années l'éclairage de dispositifs de signalisation tels que les feux de signalisation, les feux de véhicules automobiles (clignotants, feux de position), ou de lampes portatives ou de balisage.

L'intérêt des diodes est leur longue durée de vie, leur efficacité lumineuse, leur robustesse et leur compacité, rendant les appareillages les employant davantage pérennes, et nécessitant un entretien réduit.

Le document DE10322561 propose un double vitrage isolant pour l'éclairage de façades de bâtiments comprenant (dans le mode de réalisation en relation avec la figure 4 de ce document DE10322561) :
- un premier vitrage avec des faces externe et interne,
- un deuxième vitrage avec des faces principales externes et internes, en regard du premier vitrage,
- un espace interne rempli d'une lame de gaz,
- un scellement périphérique,
- un cadre périphérique en aluminium, entre les deux vitrages, formant l'espaceur et en contact avec les moyens de scellement, cadre porteur de deux groupes de diodes respectivement sur deux bords opposés du vitrage, diodes fixées sur des embases perpendiculaires aux faces principales des vitrages,
- un réflecteur pour chaque groupe de diodes, formant une extension du cadre, réflecteur agencé pour rediriger vers la face interne du premier vitrage de la lumière allant vers la face interne du deuxième vitrage,
- la lumière étant ensuite réfléchie ou déviée par la ou les faces internes et/ou par un ou des revêtements sur les faces internes ou externes.

La demanderesse a constaté que ce vitrage isolant à diodes électroluminescentes n'est pas optimisé en termes de performances optiques.

L'invention a pour but de proposer un vitrage multiple (notamment isolant) lumineux plus efficace, de préférence simple et compatible avec les exigences industrielles (facilité et rapidité de production, fiabilité, ...).

L'invention peut même de préférence élargir la gamme des applications possibles.

A cet effet, la présente invention propose d'abord un vitrage multiple lumineux qui comporte :
- un premier élément verrier (sensiblement) plan, en verre minéral ou organique, avec des première et deuxième faces principales et une tranche,
- un deuxième élément verrier (sensiblement) plan, en verre ou organique, de préférence de dimensions similaires ou identiques que le premier élément verrier et de même nature et de même forme (rectangulaire, carré, rond..), avec une face principale en regard de la première face, dite troisième face, et une autre face principale, dite quatrième face, et une tranche,
- les premier et deuxième éléments verriers étant solidaires et espacés,
- un espace interne au moins entre les premières et troisième faces, espace notamment sous vide ou rempli d'une lame de gaz, tel(s) que de gaz rare(s) ou de l'air,
- un espaceur desdits premier et deuxième éléments, espaceur notamment en périphérie du vitrage, notamment délimitant l'espace interne,
- au moins un groupe de diodes électroluminescentes dans l'espace interne, diodes sur une ou plusieurs embases (autrement dit support de diodes), diodes notamment alignées le long d'un axe, diodes ayant naturellement un spectre d'émission donné dans le visible,
les diodes dudit groupe ayant chacune une direction principale d'émission donnée sensiblement parallèle à la première face, typiquement jusqu'à +5° ou -5° par rapport à la première face (voire la troisième face),
- un réflecteur de la lumière venant dudit groupe de diodes, qui comprend une pièce fixée au vitrage dans l'espace interne,
- une première zone lumineuse associée au premier élément verrier, lumière venant dudit groupe de diodes.

Et ladite pièce du réflecteur, présente une surface réfléchissante centrale (notamment plane ou concave par rapport au groupe de diodes), oblique par rapport à la première face et notamment en regard du groupe de diodes, apte à renvoyer, dans une première position, et avec une éventuelle surface réfléchissante latérale, des rayons dit centraux dudit groupe de diodes incluant la direction principale d'émission ou les directions principales d'émission et formant au moins 50% du flux total des diodes dudit groupe, rayons centraux renvoyés sur la première zone lumineuse, ladite première zone lumineuse étant pourvue d'un premier moyen diffusant de lumière recevant les rayons centraux. Le réflecteur, éventuellement au-delà de la surface centrale éventuellement dédoublée, peut s'étendre jusqu'à entrer en contact avec la première face ou jusqu'à laisser au maximum un jeu de moins de 5 mm, voire inférieur ou égal 1 mm avec la première face, ceci en fonction de la hauteur de l'espace interne.

La pièce faisant partie voire formant le réflecteur comporte:
- une première aile comprenant la surface centrale oblique qui est plane ou concave vers les diodes et une zone réfléchissante latérale,
- prolongée par une autre aile plane ou concave vers les diodes espacée ou sur la troisième face,

Dans le vitrage isolant lumineux de l'art antérieur les rayons centraux (autour de la direction principale d'émission) sont perdus, et seuls certains rayons latéraux sont renvoyés vers le premier élément verrier.

Grâce au réflecteur selon l'invention, les rayons centraux sont renvoyés vers la première face et/ou la troisième face. Ce réflecteur assure donc un meilleur rendement optique.

La surface centrale (dédoublée ou non) selon l'invention peut servir aussi pour recycler la lumière rétrodiffusée par les moyens diffusants, et/ou réfléchie sur la ou les embases des diodes et/ou réfléchie (réflexion spéculaire notamment) sur l'espaceur du double-vitrage, par exemple espaceur métallique ou métallisé lorsque la ou les embases sont associées à cet espaceur.

Par ailleurs, pour le vitrage isolant lumineux de l'art antérieur ni la présence ni le positionnement de moyen diffusant n'est explicite.

Selon l'invention le premier moyen diffusant et l'éventuel deuxième moyen diffusant délimitent l'étendue de la première zone lumineuse et de l'éventuelle deuxième zone lumineuse, notamment en bande. Les moyens diffusants empêchent un éblouissement particulièrement intense à l'angle de réflexion spéculaire.

L'éclairage est en outre homogène grâce aux moyens diffusants.

Le groupe de diodes est par exemple équidistant des premier et deuxième éléments verriers.

La première zone lumineuse (respectivement la deuxième zone lumineuse) peut couvrir l'ensemble de la surface (fonctionnelle, visible) du premier élément verrier (respectivement l'ensemble du deuxième élément verrier), à l'émargeage près, notamment dans le cas d'une petite surface vitrée, par exemple rectangulaire longue et peu large. Par exemple, le vitrage forme des moyens d'éclairage linéaires pour la signalisation, un garde corps etc.

La première zone lumineuse (respectivement la deuxième zone lumineuse) peut couvrir une fraction de la surface (fonctionnelle, visible) du premier élément verrier (respectivement une fraction du deuxième élément verrier), par exemple une zone (bande...) lumineuse assez étroite dans le cas d'une grande surface vitrée, lorsqu'une première zone sombre c'est-à-dire non lumineuse (respectivement une deuxième zone sombre), notamment une zone centrale, a une fonctionnalité donnée distincte.

La largeur (maximale) L1 (largeur constante ou variable) de la première zone lumineuse (de toute forme possible) et/ ou l'éventuelle largeur (maximale) L2 (largeur constante ou variable) de la deuxième zone lumineuse (de toute forme possible) peuvent être de préférence inférieure à 200 mm voire inférieure ou égale à 100 mm, notamment pour laisser une surface de zone sombre importante.

La première zone lumineuse peut être périphérique, notamment le long d'un bord de vitrage et la première zone sombre et la deuxième zone sombre) plus centrale, alors plus éloignée des diodes que la première zone sombre.

La première zone lumineuse peut être dans une zone donnée du vitrage, qui est par exemple une zone centrale, et la première zone sombre peut être plus périphérique.

La première zone sombre (unique ou multiple, uniforme ou non) peut être choisie parmi :
- une zone (semi) transparente du premier élément verrier,
- et/ou une zone réfléchissante formant miroir, par dépôt d'un revêtement réfléchissant sur le premier élément verrier notamment sur la première face, par exemple une argenture, avec de préférence le premier moyen diffusant formé par attaque du miroir,
- et/ou une zone translucide, satinée (préservation de l'intimité...) par exemple par texturation du premier élément verrier,
- et/ou une zone décorative, par un revêtement opaque et/ou coloré ou par le premier élément verrier teinté dans la masse.

Le deuxième élément verrier peut comprendre une zone sombre, c'est-à-dire non lumineuse, dite deuxième zone sombre, de préférence en regard de la première zone sombre, notamment adjacente et/ou à proximité de l'éventuelle deuxième zone lumineuse.

La deuxième zone sombre (unique ou multiple, uniforme ou non) peut être choisie parmi :
- une zone (semi) transparente du deuxième élément verrier,
- et/ou une zone réfléchissante formant miroir, par dépôt d'un revêtement réfléchissant sur le deuxième élément verrier notamment sur la troisième face, par exemple une argenture, avec de préférence le deuxième moyen diffusant éventuel formé par attaque du miroir,
- et/ou une zone translucide, satinée (préservation de l'intimité...) par exemple par texturation du deuxième élément verrier,
- et/ou une zone décorative, par un revêtement opaque et/ou coloré ou par le deuxième élément verrier teinté dans la masse.

La première zone sombre et la deuxième zone sombre peuvent avoir la même fonctionnalité (être miroir, transparente, translucide, décorative), notamment avec des moyens identiques, ou des fonctionnalités distinctes.
- être miroir pour l'une et pour l'autre transparente et/ translucide, et/ou décorative,
- être transparente pour l'une et pour l'autre translucide et/ou décorative.

Le vitrage peut être fixé à un élément opaque (mur, sol etc). Sinon, la quatrième face peut être visible.

Une surface réfléchissante pour assurer la fonction de miroir peut être usuellement d'une couche à base d'argent. Le miroir peut être le produit SGG Miralite de la société SAINT-GOBAIN GLASS, avec une peinture de protection à l'oxydation, ou en variante à base de chrome telle que le produit SGG Mirastar de la société SAINT-GOBAIN GLASS.

Naturellement, selon l'invention, de préférence au moins une partie (voire tous) des rayons latéraux (c'est-à-dire au-delà des rayons centraux) allant directement vers la première face (sans rencontrer de réflexions) rencontre le premier moyen diffusant.

Et, de préférence au moins une partie voire tous les rayons latéraux (au-delà des rayons centraux) allant directement vers la troisième face (sans rencontrer de réflexions) rencontrent le deuxième moyen diffusant.

Dans un mode de réalisation préféré, le réflecteur, s'étendant éventuellement au-delà de la surface centrale éventuellement dédoublée et de l'éventuelle surface latérale, comprend :
- une première zone limite de réflexion des rayons émis, notamment une première extrémité du réflecteur (arête etc), formant un angle α1 avec la ou les directions principales d'émission, l'étendue du premier moyen diffusant étant telle que la majorité, voire au moins 80%, voire même 100%, des rayons dits latéraux au delà de α1, et en direction de la première face sont diffusés par le premier moyen diffusant, ceci dans la (seule) position de fonctionnement voire dans toutes les positions de fonctionnement,
- ou, l'étendue de la surface centrale et de la surface latérale réfléchissante étant telles que la majorité, voire au moins 80% (voire même 100%) des rayons dits latéraux en direction de la troisième face sont réfléchis vers le premier moyen diffusant.

Si la première zone limite de réflexion des rayons émis ne touche pas la première face, en particulier, si la surface centrale est courte et n'est pas associée à une surface latérale, il est ainsi souhaitable d'étendre le premier moyen diffusant suffisamment en direction de l'éloignement de la source pour utiliser le maximum de rayons pour la première zone lumineuse.

Si la première zone limite de réflexion des rayons émis touche la première face, il n'est bien sûr pas nécessaire de prolonger le premier moyen diffusant au-delà de la zone de contact (en direction de l'éloignement de la source).

En outre, on peut préférer étendre le premier moyen diffusant jusqu'au niveau où le rayon le plus latéral (divergent, c'est-à-dire défini par un angle correspondant au demi angle maximal d'émission) rencontre la première face.

Il en est de même pour la deuxième zone limite de réflexion. La surface latérale peut s'étendre depuis la surface centrale (notamment par extension de la pièce et/ou par ajout d'une couche réfléchissante sur la troisième face) jusqu'à recevoir le rayon le plus latéral (divergent), c'est-à-dire défini par un angle correspondant au demi angle maximal d'émission.

Le vitrage multiple peut inclure une fonction de basse émissivité, de contrôle solaire ou tout autre revêtement fonctionnel (anti-rayures, anti-salissures ...) de préférence sur les deuxième et quatrième faces ....

Le premier moyen diffusant peut être de préférence associé à la première face et de préférence le premier moyen diffusant est formé par texturation de surface du premier élément verrier, notamment sablage, acidage, abrasion ou par rajout d'un élément diffusant, notamment en couche, de préférence par sérigraphie d'un émail ou d'une couche diffusante ou encore formé à partir d'une matière plastique diffusante feuilletée avec le premier élément verrier.

Le deuxième moyen diffusant peut être de préférence associé à la troisième face et de préférence le deuxième moyen diffusant est formé par texturation de surface du deuxième élément verrier, notamment sablage, acidage, abrasion ou par rajout d'un élément diffusant, notamment en couche, de préférence par sérigraphie d'un émail ou d'une couche diffusante ou encore formé à partir d'une matière plastique diffusante feuilletée avec le deuxième élément verrier.

Si les moyens diffusants sont agencés dans l'épaisseur du verre et/ou sur la face interne (première face et/ou troisième face), ils sont ainsi protégés et la face externe (deuxième face et/ou quatrième face) en contact avec l'environnement extérieur peut être lisse et aisément nettoyable.

L'attaque acide, le sablage, la gravure (avantageusement par laser) ou la sérigraphie pourront être préférés car fournissant une délimitation des zones traitées aisément contrôlable et reproductible industriellement.

On peut citer comme verre acidé, le verre Satinovo® de SAINT-GOBAIN GLASS et le verre avec la couche diffusante Smoothlite® de SAINT-GOBAIN GLASS.

Le premier (respectivement le deuxième) élément verrier peut présenter une forte transmission lumineuse dans la ou les zones sombres, d'au moins 85% voire plus, tandis qu'associé aux moyens diffusants il présente une transmission lumineuse inférieure à 85% voire inférieure ou égale à 70%, et de préférence supérieure à 20%.

Le flou dans la première zone lumineuse (respectivement la deuxième) peut être de préférence supérieur à 70% voire supérieur ou égal à 85% et mesuré de manière classique avec un appareil dit Hazemeter.

Le premier élément verrier et/ou le deuxième élément verrier peut être en verre minéral clair voire extra-clair. Pour le verre extra-clair; on peut se référer à la demande WO04/025334 pour la composition d'un verre extra-clair. On peut choisir en particulier un verre silicosodocalcique avec moins de 0,05% de Fe III ou de Fe₂O₃. On peut choisir par exemple le verre Diamant® de SAINT-GOBAIN, le verre Albarino® de SAINT-GOBAIN (texturé ou lisse), le verre OptiWHITE® de Pilkington, le verre B270® de Schott.

En outre, on préfère un verre minéral pour les premier et deuxième éléments verriers pour ses multiples atouts :
- le verre présentant une bonne résistance à la chaleur, il peut être proche des diodes malgré le fait qu'elles constituent des points chauds,
- le verre est mécaniquement résistant de sorte qu'il présente une facilité de nettoyage et ne se raye pas, ce qui présente un intérêt particulier pour les vitrages installés dans des lieux imposant une hygiène stricte,
- le verre répond aux besoins des normes de sécurité au feu.

Il peut s'agir à titre d'exemple, selon notamment le rendu esthétique ou l'effet optique souhaité et/ou la destination du vitrage multiple de :
- verre de composition standard, tel que le verre Planilux® de la société SAINT-GOBAIN GLASS, de coloration légèrement verte,
- verre extra-clair sans coloration (neutre) tel que le verre Diamant® de la société SAINT-GOBAIN GLASS,
- verre imprimé de type pyramidal, tel que le verre Albarino® de la société SAINT-GOBAIN GLASS, des reliefs en forme de pyramides étant établis sur la face externe du substrat en regard de l'environnement extérieur du luminaire,
- verre trempé présentant une meilleure résistance mécanique,
- verre feuilleté.

Le premier et/ou le deuxième élément verrier, notamment feuilleté, peut être associé, à un élément verrier additionnel ou former un triple vitrage sous vide ou isolant. Le premier élément verrier est par exemple central ou à l'extérieur.

On peut définir pour chaque diode du groupe un ensemble de rayons lumineux formant les rayons centraux dans un cône d'émission autour de la direction principale d'émission et correspondant à au moins 30% du flux émis par cette même diode voire à 50%.

Pour déterminer le flux total dit S2 émis par le groupe de diodes, on utilise de manière classique un goniomètre agencé de façon à mesurer l'ensemble des rayons émis (primaires). Pour déterminer le flux total réfléchi dit S1, on utilise le goniomètre agencé de façon à mesurer les rayons émis (primaires) du groupe de diodes et réfléchis par le réflecteur. Ainsi S1/S2 doit être supérieure ou égal à 30% voire à 50%.

De préférence, pour plus de simplicité, les diodes dudit groupe sont choisies avec la même (seule) direction principale d'émission ϑo.

Et de préférence, pour un éclairage uniforme, les diodes dudit groupe sont choisies avec le même spectre, mono ou polychromatique.

On préfère que le faisceau soit divergent pour une meilleure homogénéité.

Aussi, le demi-angle à mi-hauteur ϑ_{M1} (en direction de la première zone lumineuse) et/ou ϑ_{M2} (en direction de la deuxième zone lumineuse) peut être d'au moins 50°, de préférence d'au moins 60° voire d'au moins 70°.

Le cône d'émission peut être symétrique ou asymétrique par rapport à ϑo.

Le cône d'émission peut être par exemple lambertien.

La puissance de chaque diode dudit groupe peut être inférieure à 1 W, notamment inférieure 0,5 W et le groupe de diodes étant réparti sur la ou les embases de longueur totale L0 exprimée en mètre, la puissance totale dudit groupe exprimée en Watt est inférieure ou égale à 30 [W/m] x L [m] pour limiter la chauffe et donc pérenniser les diodes.

Pour une efficacité lumineuse encore meilleure, l'embase peut porter une surface libre (plane ou inclinée) autour du groupe de diodes et diffusante, par exemple laque ou peinture. On utilise par exemple un réflecteur blanc. L'embase peut être :
- solidaire dudit espaceur (fixée sur directement ou indirectement), notamment dans le cas d'un éclairage périphérique, la première zone lumineuse peut alors s'étendre le long d'un bord de la première face s'étendre le long d'un bord de la troisième face et de préférence, la direction principale est alors normale à l'embase,
- ou solidaire d'un plot (fixée sur directement ou indirectement) dans l'espace interne, notamment dans le cas d'un éclairage plus central, le groupe de diodes pouvant être fixé sur le plot et éventuellement un groupe additionnel de diodes sur un autre plot adjacent en regard dudit plot.

L'espaceur périphérique peut être un profilé de toute section, notamment mononolithique, cadre notamment si nécessité de vide, de gaz isolant(s). L'espaceur est en périphérie du vitrage, entre les première et troisième faces voire sur les tranches.

Le plot peut être un espaceur additionnel, de toute forme. Il peut être aussi moins haut que la hauteur de l'espace interne, et recevoir sur la face horizontale l'embase avec les diodes à émission latérale.

En outre, le réflecteur peut être fixé sur l'espaceur ou sur le plot voire former une extension dudit espaceur ou du plot.

L'embase peut être de toute forme, par exemple plane, notamment de section transversale carrée ou rectangulaire. Les diodes peuvent être de simples puces ou avec une encapsulation à faible volume, par exemple de type « SMD » (Surface Monted Device en anglais) ou « CHIP on BOARD ». Il n'est pas nécessaire d'utiliser des lentilles.

L'embase est souvent nommée en anglais PCB pour Printed Circuit Board en anglais. Elle est constituée de matière plastique ou est métallique, notamment aluminium.

De préférence l'embase (ou les embases) est métallique et les diodes sont soudées sur des pistes qui sont isolées électriquement du matériau métallique.

Le matériau métallique de l'embase étant conducteur thermique, les embases peuvent être directement plaquées contre l'espaceur métallique (ou contre un plot additionnel métallique ou encore une partie métallique de la pièce du réflecteur entre l'embase et l'espaceur ou le plot) pour obtenir la dissipation thermique.

La fixation de l'embase peut être réalisée par exemple par clipsage et/ou ou vissage.

Et de préférence on peut intercaler entre l'espaceur métallique (ou le plot métallique et/ou la partie métallique du réflecteur) et l'embase un conducteur thermique (type graisse thermique, scotch thermique et/ou colle thermique ...) pour obtenir encore une meilleure dissipation thermique, et ce pour une meilleure efficacité lumineuse et pour la pérennité des diodes.

Ainsi, la fixation de l'embase peut être réalisée de préférence par des moyens de solidarisation, tels que de la colle ou du ruban adhésif double face thermiquement conducteur.

Le ruban adhésif présente l'avantage de fournir une épaisseur calibrée, permettant à l'embase d'être parfaitement plane et d'assurer aux diodes d'être toutes à égale distance de l'espaceur (ou du plot ou du réflecteur). De plus, le ruban adhésif permet sa fixation préalable à l'embase.

Un assemblage de l'embase des DEL via un adhésif double-face ou une colle durcissable (qui ne fournit pas une fixation immédiate) est préféré car il permet un positionnement relatif de l'embase de faibles dimensions sur l'espaceur ou le plot ou le réflecteur.

On peut utiliser en outre de la graisse thermique entre l'embase et l'espaceur métallique ou le plot métallique ou le réflecteur.

Avec une embase plastique, les diodes sont soudées sur des surfaces dissipatrices de chaleur (dites "thermal pad" en anglais) rapportées sur les deux faces opposées de l'embase et au travers de son épaisseur. La fixation est réalisée nécessairement par un matériau isolant électrique de solidarisation conducteur thermique associé aux surfaces de dissipation thermiques. Le matériau de solidarisation conducteur thermique est par exemple de la colle ou du ruban adhésif double face thermiquement conducteur, déjà cités.

Le réflecteur est de préférence spéculaire avec notamment un coefficient de réflexion supérieur ou égal à 70% voire à 80% ou éventuellement le réflecteur est diffusant. La pièce faisant partie, voire formant le réflecteur peut être métallisée ou métallique notamment en aluminium anodisée.

Le réflecteur peut être monolithique, en ladite pièce, notamment métallique ou bimatière : par exemple association de la pièce notamment métallique formant la surface centrale éventuellement dédoublée et de couche(s) réfléchissante(s), notamment métallique(s), sur la troisième face voire sur l'espaceur.

Dans une réalisation simple et efficace, la pièce faisant partie, voire formant le réflecteur peut être une plaque plane ou concave (par rapport aux diodes), éventuellement avec un ou plusieurs plis ou courbures, d'épaisseur inférieure ou égale à 1 mm.

La plaque, avec des tranches longitudinales et latérales (tranches les plus courtes), peut être fixée par exemple
- par une ou les tranches latérales notamment sur l'espaceur périphérique,
- et/ou par au moins une surface arrière à l'opposé de la surface avant orientée vers les diodes, notamment la surface latérale ou une surface entre l'espaceur ou le deuxième élément verrier.

La pièce faisant partie, voire formant le réflecteur peut être creuse ou pleine, avec des tranches latérales, notamment avec une section transversale triangulaire :
- avec une surface (arrière) d'appui voire de fixation sur la première notamment sous le premier moyen diffusant et/ou sur la troisième face notamment sous le deuxième moyen diffusant éventuel,
- ou fixée par exemple par la ou les tranches latérales notamment sur l'espaceur périphérique.

Dans un double vitrage de type vitrage isolant ou sous vide, l'espace interne peut avoir une hauteur au minimum de 5 mm. On préfère une hauteur la plus grande possible pour ajuster plus librement le réflecteur (oblicité etc).

Dans un double vitrage avec deux vitres simplement solidaires, l'espace interne a une hauteur quelconque.

Le réflecteur, éventuellement au-delà de la surface centrale éventuellement dédoublée s'étend jusqu'à entrer en contact avec la troisième face ou jusqu'à laisser au maximum un jeu de moins de 5 mm voire inférieur ou égal 1 mm avec la troisième face, ceci en fonction de la hauteur de l'espace interne.

La surface centrale forme un angle aigu de 20° à 60°, notamment de 30° à 50° par rapport à la première face.

La projection verticale sur la première face et la projection verticale sur la troisième face d'au moins la surface centrale éventuellement dédoublée, voire de l'ensemble du réflecteur, sont chacune inférieure ou égale à 3 mm. Le réflecteur s'étend latéralement au-delà de la surface centrale vers la première face et formant une autre zone latérale réfléchissante espacée de la première face avec une extrémité courbée vers la direction opposée aux diodes, pour étaler le faisceau, notamment par repli d'une pièce profilé plane, de section droite (tôle métallique notamment). La pièce faisant partie voire formant le réflecteur peut comprendre
- une première aile oblique comprenant la surface centrale et éventuellement la surface réfléchissante latérale,
- prolongée par une deuxième aile plane notamment de fixation entre l'espaceur ou un plot dans l'espace interne et entre la troisième face ou encore sur l'espaceur ou sur un plot dans l'espace interne et notamment la deuxième aile est métallique et sous l'embase pour la dissipation thermique. Le réflecteur peut être masqué par un revêtement opaque, notamment un émail, un miroir ou un revêtement décor, par exemple coloré, en regard du premier moyen diffusant voire sur l'ensemble de la troisième ou quatrième face. La pièce faisant partie voire formant le réflecteur peut comprendre
- l'autre aile sur la troisième face, et fixée par collage à la troisième face.

La pointe, en regard de la source, est centrée ou décalée de la direction principale d'émission.

Et de préférence le réflecteur, pour sa fixation, peut présenter une section transversale en M dans une zone décalée de la première zone lumineuse (entre deux barrettes de diodes etc) et éventuellement sous les moyens diffusants étendus à cette zone « sombre ».

Le vitrage multiple peut être un double vitrage ou un vitrage sous vide notamment avec un système d'étanchéité périphérique, par exemple de type mastic combiné à du butyle, de préférence entre les première et troisième faces ou à l'extérieur notamment comme dans le brevet WO0179644.

L'espaceur est alors un cadre (de section en C, de section fermée notamment carrée ou rectangulaire), l'espaceur logeant éventuellement un dessicant.

Les éléments verriers peuvent être solidaires par collage, desdits premier et deuxième éléments, entre les première et troisième faces.

Le vitrage peut comprendre un autre groupe de diodes, une autre première zone lumineuse notamment le long d'un bord opposé ou adjacent au bord de la première zone lumineuse choisie périphérique.

Le réflecteur peut être d'un seul tenant servant ainsi pour ladite autre première zone, il comprend par exemple plusieurs groupes de diodes s'étendant le long de plusieurs voire tous les bords (aux coins près).

Le réflecteur (au moins la surface centrale) est par exemple une pièce monolithique, notamment un cadre.

Le ou les groupes de diodes peuvent être couplés à des moyens de pilotage permettant d'émettre de la lumière soit en permanence, soit par intermittence, avec différentes intensités, soit d'une couleur donnée, soit de différentes couleurs, notamment en fonction de la quantité de la lumière naturelle.

Le vitrage peut former un éclairage décoratif, éclairage architectural, éclairage de signalisation ou d'affichage.

Le vitrage peut être destiné :
- à un vitrage de bâtiment, comme une façade lumineuse, une fenêtre lumineuse, un plafonnier, une dalle de sol ou murale lumineuse, une porte vitrée lumineuse, une cloison lumineuse, une marche d'escalier,
- à un véhicule de transport, comme vitre latérale lumineuse ou un toit vitré lumineux ou une fenêtre lumineuse, une porte vitrée lumineuse, notamment de transport en commun, train, métro, tramway, bus ou de véhicule aquatique ou aérien (avion),
- à l'éclairage routier ou urbain,
- à un vitrage de mobilier urbain, comme une partie vitrée lumineuse d'abribus, de balustrade, de présentoir, d'une vitrine, à un élément d'étagère, d'une serre,
- à un vitrage d'ameublement intérieur, comme une paroi lumineuse de salle de bains, un miroir lumineux, à une partie vitrée lumineuse d'un meuble,
- à une partie vitrée, notamment porte, étagère vitrée, couvercle d'équipement réfrigéré domestique ou professionnel.

La robustesse des diodes est particulièrement intéressante dans des utilisations intensives telles que dans les transports en commun du type trains, avions, cars, paquebots de plaisance ....

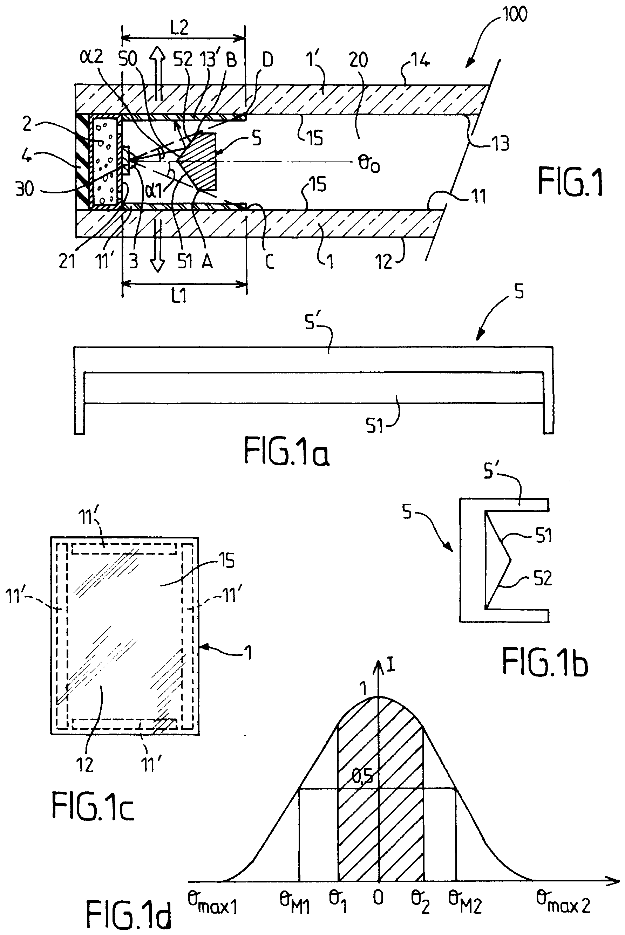

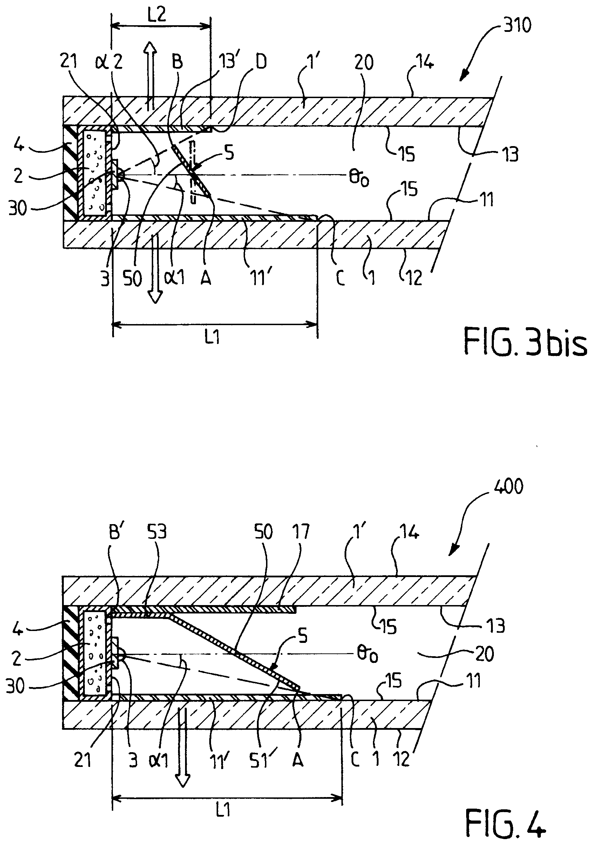

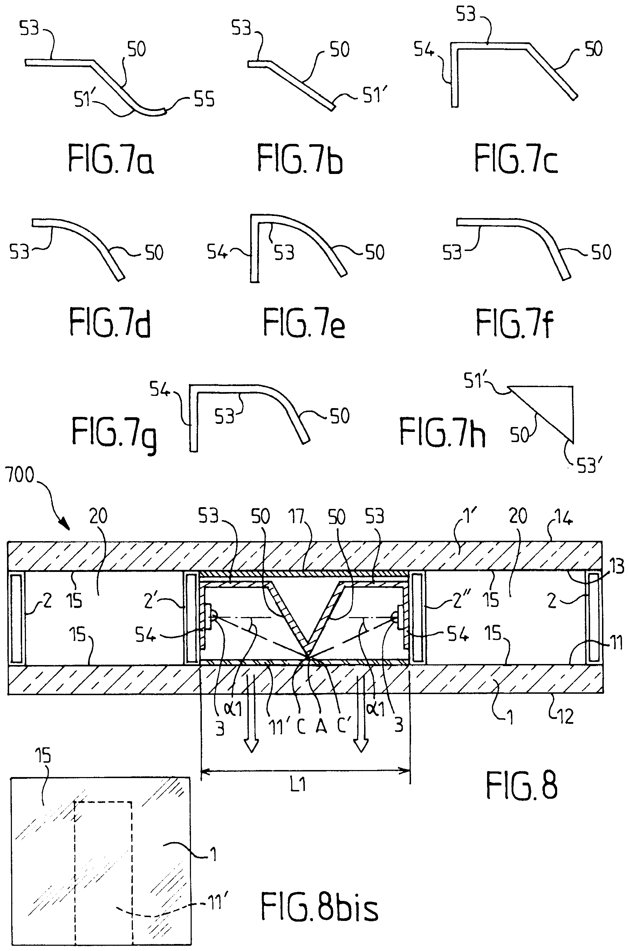

D'autres détails et caractéristiques avantageuses de l'invention apparaissent à la lecture des exemples de vitrages multiples lumineux illustrés par les figures suivantes :
▪ Les figures 1, 2, 3, 3bis, 4, 5, 6, et 8 représentent schématiquement des vues de coupe du vitrage multiple lumineux dans différents modes de réalisation. Les modes de réalisation selon les figures 1, 2, 3, 3bis, 6 et 7h ne font pas partie de l'invention. Les modes de réalisation selon les figures 4, 5, 7, 7a-7g, 8 et 8bis font partie de l'invention.
▪ Les figures 1a et 1b représentent schématiquement des vues de face et de côté du réflecteur du premier mode de réalisation de la figure 1 et la figure 1d le diagramme de rayonnement d'une diode du premier mode de réalisation de la figure 1 ;
▪ Les figures 1c et 8bis représentent schématiquement les vues de dessus des vitrages multiples lumineux des figures 1 et 8 ;
▪ Les figures 7a à 7g représentent des vues de coupe transversale de réflecteurs dans différents modes de réalisation de l'invention.

On précise que par un souci de clarté les différents éléments des objets (y compris les angles) représentés ne sont pas nécessairement reproduits à l'échelle. En outre, sur les figures, les rayons lumineux ne suivent pas nécessairement rigoureusement les lois de l'optique.

La figure 1 représente schématiquement une vue partielle en coupe longitudinale d'un vitrage multiple à diodes électroluminescentes 100 dans un premier mode de réalisation qui ne fait pas partie de l'invention.

Le vitrage 100, ici un vitrage isolant, comporte:
- un premier élément verrier plan 1, en verre minéral avec des première et deuxième faces principales 11, 12 par exemple feuille de verre carrée (ou rectangulaire etc),
- un deuxième élément verrier plan 1', avec une face principale en regard de la première face, dite troisième face 13, et une autre face principale 14, dite quatrième face, par exemple feuille de verre carrée (ou rectangulaire etc),
- les premier et deuxième éléments étant solidaires et espacés,
- un espace interne, entre les première et troisième faces, espace notamment sous vide ou rempli d'une lame de gaz, tel que de gaz rare(s) ou de l'air,
- un espaceur 2 des premier et deuxième éléments verriers en périphérie du vitrage, délimitant l'espace interne rempli d'une lame de gaz, espaceur sous forme d'un cadre 2 de section transversale rectangulaire et avec une face libre perforée pour laisser le dessicant en contact avec la lame d'air ou de gaz, et éventuellement dans une variante on rajoute des billes et on forme un vitrage sous vide,
- dans l'espace interne, quatre groupes de diodes 3 sur quatre embases 30, (autrement dit quatre barrettes de diodes), chacune associée à une face libre dudit espaceur et ainsi réparties :
   - un premier groupe de diodes électroluminescentes le long d'un premier bord,
   - un deuxième groupe de diodes électroluminescentes le long d'un deuxième bord,
   - un troisième groupe de diodes électroluminescentes le long d'un troisième bord,
   - un quatrième groupe de diodes électroluminescentes le long du quatrième bord,
les diodes de chaque groupe ayant chacune une direction principale d'émission donnée sensiblement parallèle à la première face, par exemple à équidistance des première et troisième faces 11, 13.

Et grâce aux quatre groupes de diodes :
- quatre premières zones lumineuses, associées au premier élément verrier 1, pourvu chacun d'un premier moyen diffusant 11' de préférence sur la première face 11, par exemple sous forme de quatre bandes lumineuses périphériques le long des quatre bords (comme montré en figure 1c), de largeur L1 identiques ou distinctes, notamment inférieures à 200 mm voire à 100 mm, et adjacentes à une première zone sombre centrale 15,
- quatre deuxièmes zones lumineuses, associées au deuxième élément verrier 1' pourvue chacune d'un deuxième moyen diffusant 13', de préférence sur la troisième face, par exemple sous forme de quatre bandes périphériques le long des quatre bords, de largeur L2 identiques ou distinctes entre-elles et à L1, notamment inférieures à 200 mm voire à 100 mm, en regard des premières zones lumineuses, et adjacentes à une deuxième zone sombre adjacente centrale 15 en regard de la première zone sombre.

Naturellement on peut utiliser plusieurs barrettes de diodes pour chaque bande lumineuse, en fonction de la longueur notamment.

Naturellement les bandes lumineuses peuvent être identiques ou distinctes par leur forme, leur largeur, leur couleur, leur nature (moyens de diffusion différents) ...

On peut aussi vouloir supprimer une ou des deuxièmes bandes lumineuses.

Une pièce métallique, en aluminium anodisée fixée au vitrage dans l'espace interne est un réflecteur 5, qui forme un séparateur de faisceaux venant du premier groupe de diodes et contribue à améliorer l'efficacité lumineuse et l'homogénéité de la première et de la deuxième zone lumineuse.

Pour ce faire, la pièce métallique 5 présente une surface réfléchissante centrale dédoublée 50, 51, 52 constituée :
- d'une première surface centrale 51, oblique par rapport à la première face, suivant un premier angle aigu de 30° à 50° par rapport à la première face 11, apte à renvoyer des premiers rayons centraux du premier groupe de diodes sur le premier moyen diffusant 11' de la première zone lumineuse,
- d'une deuxième surface centrale 52, oblique par rapport à la troisième face, suivant un deuxième angle aigu identique au premier angle aigu de 30° à 50° par rapport à la troisième face 13 apte à renvoyer des deuxièmes rayons centraux dudit groupe de diodes sur le deuxième moyen diffusant 13',
- les deux surfaces 51, 52 étant jointives (formant ici une pointe).

Des premiers et deuxièmes rayons centraux incluent la direction principale d'émission (ou les directions principales d'émission le cas échéant) et forment au moins 30% voire 50% ou plus du flux total d'émission des diodes dudit premier groupe.

La direction principale d'émission peut être réfléchie par la pointe comme montrée ici, ou en variante par la première surface centrale 51 ou par la deuxième surface centrale 52. La direction principale d'émission peut être normale à l'embase 30.

Les embases 30 sont de préférence métalliques, notamment en aluminium, et éventuellement avec une surface diffusante autour des groupes de diodes pour le recyclage de rayons.

Les embases 30 sont par exemple fixées (par collage, vissage...) sur la face interne 21 de l'espaceur, ici en cadre, par exemple sensiblement perpendiculaire à la première face.

On peut employer de préférence de la graisse thermique entre l'embase et l'espaceur, tel que le composé CK4960® vendu par la société Jetart.

On peut définir pour chaque diode un ensemble de rayons lumineux dits centraux dans un cône d'émission autour de la direction principale d'émission caractérisé par un premier demi-angle ϑ1 par rapport à la direction principale ϑo et par un deuxième demi-angle ϑ2 par rapport à la direction principale ϑo.

Comme montré en figure 1d, le demi-angle à mi-hauteur ϑ_{M1} (en direction de la première zone lumineuse) et/ou ϑ_{M2} (en direction de la deuxième zone lumineuse) peut être d'au moins 50°, de préférence d'au moins 60° voire d'au moins 70°. Le cône d'émission ici est lambertien.

L'ensemble des rayons dits centraux sont inclus dans un cône d'émission correspondant à au moins 30% du flux total émis par chacune des diodes.

La luminance (normale) des première et deuxième bandes lumineuses 11' 13' peuvent être identiques par exemple lorsque le faisceau émis est symétrique et séparé en 2 faisceaux identiques et si les moyens diffusants ont des propriétés optiques identiques (de même que les feuilles de verres).

Comme montré en figure 1a et 1b le réflecteur est par exemple fixé (par collage etc) via deux premières parties latérales planes 5' sur la troisième face 13 et/ou sur la première face 11 hors de la première zone lumineuse. On peut masquer ces parties par extension des premier et deuxième moyens diffusants ou par exemple par couche(s) décor(s).

Dans la zone de la première bande lumineuse 11', le réflecteur 5 a une section transversale en M. Le réflecteur est de préférence en aluminium notamment anodisé voire une pièce plastique métallisée.

Le premier et/ou le deuxième moyen diffusant 11' 13' est une couche diffusante par exemple sérigraphiée par exemple avec une transmission lumineuse d'au moins 40% (valeur mesurée sur le premier élément 1).

Le réflecteur 5,50 est délimité :
- par une première arête latérale réfléchissante A, formant notamment un angle α1 avec la ou les directions principales d'émission, l'étendue des premiers moyens diffusants 11' étant telle que tous les rayons dits latéraux au delà de α1 et en direction de la première face 11 sont diffusés par les premiers moyens diffusants 11',
- et, délimité par une deuxième arête latérale réfléchissante B, formant notamment un angle α2 avec la ou les directions principales d'émission, l'étendue du deuxième moyens diffusant 13' étant telle que tous les rayons dits latéraux au-delà de α2 et en direction de la troisième face sont diffusés par le deuxième moyen diffusant 13'.

Notamment on peut récupérer le rayon extrême touchant la première face en C au plus éloigné du premier groupe de diodes. On peut aussi récupérer l'autre rayon extrême touchant la troisième face en D au plus éloigné du premier groupe de diodes.

Les zones (centrales) sombres 15 des premier et deuxième éléments verriers sont choisies transparentes.

A titre d'exemple :
- la surface des vitrages est 600x600 mm² avec assemblage en double-vitrage des deux verres extra-clair de 2,9 mm d'épaisseur,
- les diodes ont une puissance individuelle de 0,4 W (environ), sur une longueur L0 de 450 mm soit une puissance de 20,5 W/m,
- chaque embase 30 est en aluminium et porte vingt trois diodes avec les dimensions 450 mmx10 mmx1,9 mm,
- la hauteur de l'espace interne (de l'espaceur 2) est de 22 mm,
- la largeur L1 et L2 des bandes lumineuses est de 50 mm.

On peut utiliser un réflecteur similaire pour chacun des autres groupes de diodes ou un réflecteur de conception différente (forme, nature etc) ou de fonction différente (par exemple pour un éclairage seulement via le premier élément verrier.

On remarque en outre que le réflecteur (la surface centrale dédoublée 50 au moins) est entre les moyens diffusants 11' et 13' qui peuvent le masquer d'un observateur en face du vitrage.

On peut ainsi former :
- dans une application de bâtiment, une façade lumineuse, une fenêtre lumineuse, un plafonnier, une dalle de sol ou murale lumineuse, une porte vitrée lumineuse, une cloison lumineuse, une marche d'escalier,
- dans une application de véhicule de transport, une vitre latérale lumineuse ou un toit vitré lumineux, une fenêtre lumineuse, une porte vitrée lumineuse, notamment de transport en commun, train, métro, tramway, bus ou de véhicule aquatique ou aérien (avion),
- dans une application d'éclairage routier ou urbain,
- dans un mobilier urbain, une partie vitrée lumineuse d'abribus, de balustrade, de présentoir, d'une vitrine, une partie vitrée lumineuse d'étagère, d'une serre,
- dans une application d'ameublement intérieur, une paroi lumineuse de salle de bains, une partie vitrée lumineuse d'un meuble,
- une paroi vitrée d'un équipement réfrigéré (couvercle de bacs, porte vitrée, étagère ...).

Le premier élément verrier 1 est par exemple orienté vers l'intérieur après installation. En variante, les zones (centrales) sombres 15 sont choisies (indépendamment) translucides , ou avec un miroir ou un décor (opaque et/ou coloré ...).

La figure 2 représente schématiquement une vue partielle en coupe longitudinale d'un vitrage multiple lumineux 200 à diodes électroluminescentes, dans un deuxième mode de réalisation qui ne fait pas partie de l'invention.

Le vitrage 200 diffère du vitrage 100 par l'oblicité plus grande de la deuxième surface centrale conduisant à une largeur L2 inférieure à L1.

La figure 3 représente schématiquement une vue partielle en coupe longitudinale d'un vitrage multiple lumineux 300 à diodes électroluminescentes dites DEL, dans un troisième mode de réalisation qui ne fait pas partie de l'invention.

Le vitrage 300 diffère du vitrage 100 par le réflecteur utilisé 5, 50, ici mobile, impliquant un éclairage qui est :
- dans une première position, de l'ensemble de la première zone lumineuse 11' (et éventuellement d'une fraction de la deuxième zone lumineuse 12'),
- et dans une seconde position, de l'ensemble de la deuxième zone lumineuse 13' (et éventuellement d'une fraction de la première zone lumineuse).

Dans la première position (en trait plein), le réflecteur présente une première surface réfléchissante, dite surface centrale 50, oblique par rapport à la première face, apte à renvoyer avec une ou des surfaces réfléchissantes latérales 53' et 51' si nécessaire(s), des rayons dits centraux dudit premier groupe de diodes incluant la direction principale d'émission ou les directions principales d'émission, et formant au moins 30% du flux total d'émission des diodes dudit groupe, rayons renvoyés sur le premier moyen diffusant 11' de lumière.

Le réflecteur est par exemple une simple tôle métallique, par exemple en aluminium anodisée, d'épaisseur 0,8 mm par exemple.

Pour former une première surface latérale réfléchissante 51' la plus proche de la première face, la pièce formant le réflecteur peut s'étendre jusqu'à entrer en contact avec la première face 11 ou jusqu'à laisser au maximum un jeu de moins de 5mm avec la première face.

Pour former une deuxième surface latérale réfléchissante 53' la plus proche de la troisième face, la pièce formant le réflecteur peut s'étendre jusqu'à entrer en contact avec la troisième face 13 ou jusqu'à laisser au maximum un jeu de moins de 5mm avec la troisième face.

Dans une deuxième position (en traits pointillés), la pièce formant le réflecteur est mobile, notamment pivotant autour d'un axe notamment parallèle à la première face, et en fonctionnement, la surface centrale 50 renvoie alors les rayons centraux du groupe de diodes sur le deuxième moyen diffusant 13'.

Comme oblicité de la surface centrale 50, on choisit par exemple 45° par rapport à la première face du verre.

On forme ainsi par exemple un double miroir éclairant.

Les premier et deuxième moyens diffusants sont par exemple obtenus par attaque (sablage etc) du miroir, par exemple une argenture 16 sur les première 11 et troisième faces 13 dans les deux zones sombres 15.

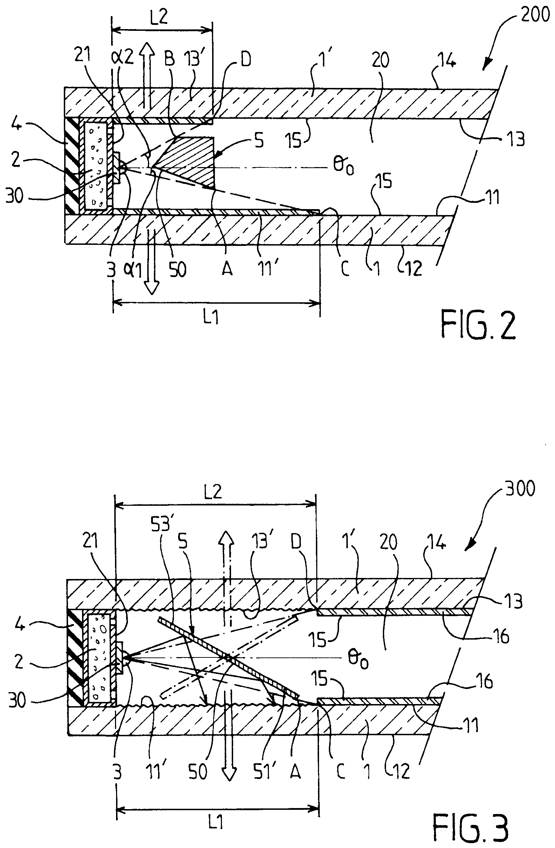

La figure 3bis représente schématiquement une vue partielle en coupe longitudinale d'un vitrage lumineux 310 à diodes électroluminescentes dites DEL, avec un réflecteur mobile dans une variante du troisième mode de réalisation qui ne fait pas partie de l'invention.

Le vitrage 310 diffère du vitrage 100 par le réflecteur utilisé 5, 50, en ce qu'il ne bascule pas forcément dans une deuxième position de fonctionnement.

Il est en outre prévu de placer le réflecteur dans une position inactive, lorsque les diodes sont éteintes, position notamment sensiblement perpendiculaire à la première face 11. Pour cela, le réflecteur 5 est suffisamment court. Notamment en positon de repos le réflecteur ne détériore pas le premier moyen diffusant 11' ou la première face 11. On peut pour cela laisser un jeu de plus de 1 mm voire de plus 5 mm par exemple.

Dans la position inactive, la projection verticale sur la première face 11 et la projection verticale sur la troisième face 13 de l'ensemble du réflecteur 5, est égale à l'épaisseur de la tôle, par exemple 3 mm ou 1 mm ou moins.

On laisse ainsi passer davantage de lumière naturelle.

Les zones centrales sombres 15 sont en outre choisies transparentes ou translucides.

La figure 4 représente schématiquement une vue partielle en coupe longitudinale d'un vitrage isolant lumineux 400 à diodes électroluminescentes dites DEL, dans un quatrième mode de réalisation de l'invention.

Le vitrage 400 diffère du vitrage 310 par le réflecteur utilisé 5, 50 impliquant un éclairage d'un seul côté par le premier groupe de diodes.

Le réflecteur comprend une pièce métallique 5, en aluminium anodisée, avec
- une première aile notamment plane comprenant la surface centrale oblique 50 et une zone réfléchissante latérale 51' vers la première face 11,
- une deuxième aile, avec une surface latérale réfléchissante 53, par exemple plane ou concave, sur la troisième face 13, notamment pour la fixation du réflecteur (par collage etc) ou en variante espacée de la troisième face et fixée sur l'espaceur.

Il s'agit par exemple d'une tôle avec un repli.

L'étendue de la surface centrale 50 et l'étendue de la surface latérale réfléchissante 53 sont telles que tous des rayons centraux et latéraux (en direction de la troisième face) sont réfléchis vers le premier moyen diffusant 11'.

Le deuxième moyen diffusant 17 (rendu non fonctionnel par la surface 53) peut être conservé ou remplacé par un éventuel miroir ou un revêtement décor si l'on souhaite masquer le réflecteur 5 de ce côté, notamment la surface latérale 53.

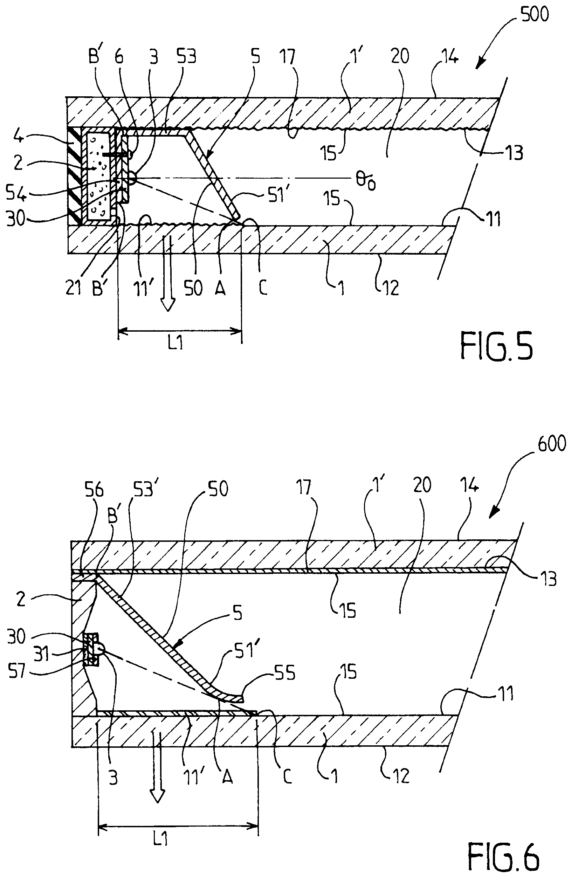

La figure 5 représente schématiquement une vue partielle en coupe longitudinale d'un vitrage isolant lumineux 500 à diodes électroluminescentes dites DEL, dans un cinquième mode de réalisation de l'invention.

Le vitrage 500 diffère du vitrage 400 précédent par le réflecteur utilisé 5, 50, par exemple une tôle avec deux replis, qui comporte :
- pour sa fixation une partie 54 associée à l'espaceur 2 par tout moyen (vissage ici),
- et pour mieux dissiper la chaleur la partie 54 est métallique et placée sous l'embase,
- et de préférence, pour renvoyer des rayons, la partie 54 métallique est autour de l'embase 30.

Dans cette configuration, le réflecteur métallique participe à la dissipation thermique ainsi que l'espaceur de préférence également métallique. Pour améliorer la conduction thermique, on peut intercaler entre chacun de ces trois éléments (espaceur, réflecteur, embase) un conducteur thermique (type scotch, colle ou graisse thermique).

Le deuxième moyen diffusant 17 (rendu non fonctionnel) est étendu à toute la troisième surface 13 donc dans la zone sombre 15, par exemple formant un verre 1' translucide pour préserver l'intimité (fenêtre de salle de bains, cloison de bureau etc).

La figure 6 représente schématiquement une vue partielle en coupe longitudinale d'un vitrage multiple lumineux 600 à diodes électroluminescentes, dans un sixième mode de réalisation qui ne fait pas partie de l'invention.

Le vitrage 600 diffère du vitrage 400 par le réflecteur utilisé 5, 50 qui comporte :
- pour sa fixation une surface 56 entre l'espaceur 2 et la troisième face 13,
- la première surface latérale réfléchissante 51' étant prolongée par une partie courbée 55 pour une transition douce entre la première zone lumineuse 11' et la zone sombre 15 du premier élément verrier,
- la deuxième surface latérale réfléchissante 53' étant ici oblique dans le prolongement de la surface centrale 50.

Il s'agit par exemple d'une tôle avec deux replis.

En outre, on utilise une surface 57 dite réflecteur blanc sur l'embase et l'espaceur métallique 2 qui est une pièce pleine (sans dessicant) et concave vers la surface centrale et un adhésif double face conducteur thermique 31 permet de fixer l'embase 30 sur l'espaceur 2.

Enfin, il s'agit d'un simple assemblage des verres 1, 1' sans nécessité d'étanchéité (c'est-à-dire typiquement sans mastic ni butyle), et non d'un vitrage isolant ou sous vide.

Les figures 7a à 7g représentent des vues de coupe transversale de réflecteurs monobloc dans différents modes de réalisation de l'invention pour un éclairage d'un côté comportant :
- une surface centrale 50 plane ou concave,
- une première surface latérale 51' éventuellement avec une surface courbe 55,
- une deuxième surface latérale 53 plane ou concave, prévue pour être en regard de la troisième face voir en contact,
- une surface de fixation 54 ou de dissipation.

La figure 7h montre en particulier une pièce 5 de section transversale triangulaire. Ce mode de réalisation ne fait pas partie de l'invention.

La figure 8 représente schématiquement une vue partielle en coupe longitudinale d'un vitrage isolant lumineux 700 à diodes électroluminescentes dans un septième mode de réalisation de l'invention.

Le vitrage 700 diffère du vitrage 500 par :
- le type de vitrage, ici sans étanchéité périphérique,
- l'emplacement des diodes 3, par exemple deux groupes de diodes en regard associés à deux plots additionnels 2' et 2",
- le réflecteur est dédoublé et d'une seule pièce avec deux parties 54, deux parties 53, deux parties 51' et deux parties 50,
- et donc l'emplacement de la première zone lumineuse 11' ici centrale et de la zone en regard 17 sur la troisième face 13, entre deux zones sombres 15 périphériques est de préférence débouchante sur une tranche pour masquer l'alimentation électrique, comme montré en figure 8bis.

## Revendications

1. Vitrage multiple lumineux (400, 500, 600, 700) comporte :
- un premier élément verrier (1) plan, en verre minéral ou organique, avec des première et deuxième faces principales (11, 12),
- un deuxième élément verrier (1') plan, en verre minéral ou organique, avec une face principale en regard de la première face, dite troisième face (13), et une autre face principale, dite quatrième face (14),
- les premier et deuxième éléments verriers étant solidaires et espacés,
- un espace interne (20), au moins entre les première et troisième faces, espace notamment sous vide ou rempli d'une lame de gaz,
- un espaceur (2) desdits premier et deuxième éléments verriers en périphérie du vitrage,
- au moins un groupe de diodes électroluminescentes dans l'espace interne, diodes sur une ou plusieurs embases (30),
- les diodes (3) dudit groupe ayant chacune une direction principale d'émission donnée sensiblement parallèle à la première face (11),
- un réflecteur (5) de la lumière venant dudit groupe de diodes (5), qui comprend une pièce fixée au vitrage dans l'espace interne,
- une première zone lumineuse associée au premier élément verrier, lumière venant dudit groupe de diodes,
- ladite pièce du réflecteur (5) présente une surface réfléchissante (50), oblique par rapport à la première face
**caractérisé en ce que** la pièce du réflecteur (5) est distincte dudit espaceur
**en ce que** la surface réfléchissante est centrale (50), apte à renvoyer, dans une première position, et avec une surface réfléchissante latérale (53, 51',53'), des rayons dits centraux dudit groupe de diodes incluant la direction principale d'émission ou les directions principales d'émission et formant au moins 50% du flux total d'émission des diodes dudit groupe, rayons centraux renvoyés sur la première zone lumineuse, ladite première zone lumineuse étant pourvue d'un premier moyen diffusant (11') de lumière recevant les rayons centraux,
le réflecteur (5), éventuellement au-delà de la surface centrale (50) s'étend jusqu'à entrer en contact avec la première face (11) ou jusqu'à laisser au maximum un jeu de moins de 5 mm avec la première face et **en ce que** la pièce faisant partie ou formant le réflecteur (5), comporte :
- une première aile comprenant la surface centrale oblique (50) qui est plane ou concave vers les diodes et une zone réfléchissante latérale (51'),
- prolongée par une autre aile plane ou concave vers les diodes (53) espacée ou sur la troisième face.

2. Vitrage multiple lumineux (400, 500, 600, 700) selon l'une des revendications précédentes **caractérisé en ce que** la première zone lumineuse (11') couvre sensiblement la surface du premier élément verrier ou laisse au moins une première zone sombre (15), c'est-à-dire non lumineuse, du premier élément verrier, notamment adjacente, qui est choisie parmi une zone réfléchissante formant un miroir (16), une zone transparente, une zone translucide (17) notamment par texturation du premier élément verrier, une zone décorative (16') par un revêtement opaque et/ou coloré et/ou coloré ou par le premier élément verrier teinté dans la masse et éventuellement **en ce que** le deuxième élément verrier (1') comprend une zone sombre (15), c'est-à-dire non lumineuse, dite deuxième zone sombre, de préférence en regard de la première zone sombre (15), notamment adjacente à l'éventuelle deuxième zone lumineuse, qui est choisie parmi une zone réfléchissante formant un miroir (16), une zone transparente, une zone translucide (17) notamment par texturation du deuxième élément verrier, une zone décorative (16') par un revêtement opaque et/ou coloré ou par le deuxième élément verrier teinté dans la masse.

3. Vitrage multiple lumineux (400, 500, 600, 700) selon l'une des revendications précédentes **caractérisé en ce que** le réflecteur (5,50) comprend :
- une première zone limite de réflexion des rayons émis (A), notamment une première extrémité du réflecteur, formant un angle α1 avec la ou les directions principales d'émission , l'étendue du premier moyen diffusant (11') étant telle que la majorité, voire au moins 80%, des rayons dits latéraux au delà de α1, et en direction de la première face (11) sont diffusés par le premier moyen diffusant (11'),
- ou, l'étendue de la surface centrale (50) et de la surface latérale réfléchissante (53', 53) étant telles que la majorité, voire au moins 80% des rayons en direction de la troisième face sont réfléchis vers le premier moyen diffusant (11').

4. Vitrage multiple lumineux (400, 500, 600, 700) selon l'une des revendications précédentes **caractérisé en ce que** le premier moyen diffusant (11') est associé à la première face (11) et/ou l'éventuel deuxième moyen diffusant (13') est associé à la troisième face (11) et de préférence le premier moyen diffusant et/ou l'éventuel deuxième moyen diffusant est formé par texturation de surface du premier ou deuxième élément verrier, notamment sablage, acidage, abrasion ou par rajout d'un élément diffusant, notamment en couche.

5. Vitrage multiple lumineux (400, 500, 600, 700) selon l'une des revendications précédentes **caractérisé en ce que** pour le groupe des diodes (3), le demi-angle à mi-hauteur est d'au moins 50°, de préférence 60° voire d'au moins 70°.

6. Vitrage multiple lumineux (400, 500, 600, 700) selon l'une des revendications précédentes **caractérisé en ce que** la puissance de chaque diode dudit groupe (3) est inférieure à 1 W, notamment inférieure 0,5 W et, le groupe de diodes étant réparti sur la ou les embases (30) de longueur totale L0 exprimée en mètre, la puissance totale exprimée en Watt dudit groupe est inférieure à 30 [W/m] x L0 [m].

7. Vitrage multiple lumineux (100, 200, 300, 310, 400, 500, 600, 700) selon l'une des revendications précédentes **caractérisé en ce que** l'embase (30) porte une surface libre diffusante (57) autour du groupe de diodes, notamment une laque ou une peinture.

8. Vitrage multiple lumineux (400, 500, 600, 700) selon l'une des revendications précédentes **caractérisé en ce que** l'embase (30) est solidaire de l'espaceur périphérique (2), la première zone lumineuse (11') s'étendant le long d'un bord de la première face (11) s'étendant le long d'un bord de la troisième face (13) ou **en ce que** l'embase (30) est solidaire d'un plot (2') dans l'espace interne notamment un espaceur additionnel.

9. Vitrage multiple lumineux (400, 500, 600, 700) selon l'une des revendications précédentes **caractérisé en ce que** l'embase (30) est métallique et fixée sur l'espaceur (2) choisi métallique ou sur un plot métallique (2') dans l'espace interne ou sur une partie métallique de la pièce (54) du réflecteur entre l'embase et l'espaceur ou le plot, fixation éventuellement via un moyen de solidarisation conducteur thermique (31) notamment colle ou ruban adhésif, et/ou **en ce qu'**est intercalée de la graisse thermique entre l'embase et l'espaceur ou le plot ou la partie métallique (54) du réflecteur.

10. Vitrage multiple lumineux (400, 500, 600, 700) selon l'une des revendications précédentes **caractérisé en ce que** le réflecteur (5), éventuellement au delà de la surface centrale (50) s'étend jusqu'à entrer en contact avec la première face (11) ou jusqu'à laisser au maximum un jeu de moins de 1 mm avec la première face.

11. Vitrage multiple lumineux (400, 500, 600, 700) selon l'une des revendications précédentes **caractérisé en ce que** la pièce faisant partie voire formant le réflecteur est métallisé ou métallique notamment en aluminium anodisée et de préférence **en ce que** la pièce faisant partie voire formant le réflecteur est :
- une plaque, éventuellement avec un ou plusieurs plis ou courbure(s), d'épaisseur inférieure ou égale à 3 mm voire à 1 mm, et/ou
- Une pièce creuse ou pleine, avec au moins une surface d'appui voire de fixation sur la troisième face et/ou sur la première face.

12. Vitrage multiple lumineux (400, 500, 600, 700) selon l'une des revendications précédentes **caractérisé en ce que** la surface centrale forme un angle aigu de 20° à 60°, notamment de 30 à 50° par rapport à la première face.

13. Vitrage multiple lumineux (400, 500, 600, 700) selon l'une des revendications précédentes **caractérisé en ce que** la projection verticale sur la première face et la projection verticale sur la troisième face d'au moins la surface centrale sont chacune inférieure ou égale à 3 mm.

14. Vitrage multiple lumineux (600) selon l'une des revendications précédentes **caractérisé en ce que**, le réflecteur (5) s'étend latéralement au-delà de la surface centrale (50) vers la première face et forme une autre zone latérale réfléchissante (51') espacée de la première face avec une extrémité oblique courbée (55) vers la direction opposée aux diodes.

15. Vitrage multiple lumineux (600) selon l'une des revendications précédentes **caractérisé en ce que** la pièce faisant partie voire formant le réflecteur (5) comprend :
- la première aile oblique (50) comprenant la surface centrale et la surface réfléchissante latérale,
- prolongée par une deuxième aile plane (54, 56), notamment de fixation, entre l'espaceur (2) ou un plot dans l'espace interne et entre la troisième face ou encore sur l'espaceur ou un plot dans l'espace interne et notamment la deuxième aile est métallique et sous l'embase (30) pour la dissipation thermique.

16. Vitrage multiple lumineux (600) selon l'une des revendications précédentes **caractérisé en ce que** l'autre aile est sur la troisième face, et fixée par collage à la troisième face.

17. Vitrage multiple lumineux (400, 500, 600, 700) selon l'une des revendications précédentes **caractérisé en ce que** le vitrage multiple est un double vitrage ou un vitrage sous vide notamment avec un système d'étanchéité périphérique de préférence entre les première et troisième faces, l'espaceur est un cadre logeant éventuellement un dessicant.

18. Vitrage multiple lumineux (400, 500, 600, 700) selon l'une des revendications précédentes **caractérisé en ce qu'**il forme un éclairage décoratif, éclairage architectural, éclairage de signalisation ou d'affichage.

19. Application du vitrage multiple lumineux (400, 500, 600, 700) selon l'une des revendications précédentes
- à un vitrage de bâtiment, comme une façade lumineuse, une fenêtre lumineuse, un plafonnier, une dalle de sol ou murale lumineuse, une porte vitrée lumineuse, une cloison lumineuse, une marche d'escalier,
- à un véhicule de transport, comme vitre latérale lumineuse ou un toit vitré lumineux ou une fenêtre lumineuse, une porte vitrée lumineuse, notamment de transport en commun, train, métro, tramway, bus ou de véhicule aquatique ou aérien (avion),
- à l'éclairage routier ou urbain,
- à un vitrage de mobilier urbain, comme un partie vitrée lumineuse d'abribus, de balustrade, de présentoir, d'une vitrine, à un élément d'étagère, d'une serre,
- à un vitrage d'ameublement intérieur, comme une paroi lumineuse de salle de bains, un miroir lumineux, à une partie vitrée lumineuse d'un meuble,
- à une partie vitrée, notamment porte, étagère vitrée, couvercle, d'équipement réfrigéré domestique ou professionnel.

## Patentansprüche

1. Leuchtende Mehrfachverglasung (400, 500, 600, 700), umfassend:
- ein erstes flaches Glaselement (1) aus mineralischem oder organischem Glas, mit einer ersten und zweiten Hauptseite (11, 12),
- ein zweites flaches Glaselement (1') aus mineralischem oder organischem Glas, mit einer Hauptseite gegenüber der ersten Seite, dritte Seite (13) genannt, und einer anderen Hauptseite, vierte Seite (14) genannt,
- wobei das erste und das zweite Glaselement fest verbunden und beabstandet sind,
- einen Innenraum (20) mindestens zwischen der ersten und der dritten Seite, der insbesondere unter Vakuum steht oder mit einer Gasschicht gefüllt ist,
- einen Abstandhalter (2) des ersten und zweiten Glaselements am Umfang der Verglasung,
- mindestens eine Gruppe Licht emittierender Dioden in dem Innenraum, Dioden auf einem oder mehreren Sockeln (30),
- wobei die Dioden (3) der Gruppe jeweils eine bestimmte hauptsächliche Emissionsrichtung im Wesentlichen parallel zu der ersten Seite (11) haben,
- einen Reflektor (5) des Lichts, das von der Gruppe von Dioden (5) kommt, der ein an der Verglasung in dem Innenraum befestigtes Teil umfasst,
- eine erste leuchtende Zone, die zu dem ersten Glaselement gehört, wobei das Licht von der Gruppe von Dioden kommt,
- wobei das Teil des Reflektors (5) eine reflektierende Oberfläche (50) aufweist, die in Bezug auf die erste Seite schräg ist,
**dadurch gekennzeichnet, dass** das Teil des Reflektors (5) von dem Abstandhalter getrennt ist,
dass die reflektierende Oberfläche zentral (50) ist, geeignet, um in einer ersten Position und mit einer seitlichen reflektierenden Oberfläche (53, 51', 53') sogenannte zentrale Strahlen der Gruppe von Dioden, die die hauptsächliche Emissionsrichtung oder die hauptsächlichen Emissionsrichtungen aufweisen und mindestens 50 % des Gesamtabgabeflusses der Dioden der Gruppe bilden, zurückzuwerfen, wobei die zentralen Strahlen auf die erste leuchtende Zone zurückgeworfen werden, wobei die erste leuchtende Zone mit einem ersten Mittel (11') zum Streuen des Lichts, das die zentralen Strahlen empfängt, versehen ist,
wobei sich der Reflektor (5) eventuell über die zentrale Oberfläche (50) hinaus erstreckt, bis er mit der ersten Seite (11) in Berührung tritt, oder bis er maximal ein Spiel von weniger als 5 mm mit der ersten Seite belässt, und dass das Teil, das Teil des Reflektors (5) ist oder ihn bildet, Folgendes umfasst:
- einen ersten Flügel, der die schräge zentrale Oberfläche (50), die flach oder zu den Dioden konkav ist, und eine seitliche reflektierende Zone (51'), umfasst
- verlängert durch einen anderen flachen oder zu den Dioden (53) konkaven Flügel, der beabstandet oder auf der dritten Seite ist.

2. Leuchtende Mehrfachverglasung (400, 500, 600, 700) nach dem vorhergehenden Anspruch, **dadurch gekennzeichnet, dass** die erste leuchtende Zone (11') im Wesentlichen die Oberfläche des ersten Glaselements bedeckt oder mindestens eine erste dunkle, das heißt nicht leuchtende Zone (15) des ersten Glaselements, die insbesondere benachbart ist, belässt, die aus einer reflektierenden Zone, die einen Spiegel (16) bildet, einer durchsichtigen Zone, einer Zone (17), die insbesondere durch Texturierung des ersten Glaselements durchscheinend ist, einer durch eine undurchsichtige und/oder farbige und/oder gefärbte Beschichtung oder von dem ersten Glaselement, das in der Masse gefärbt ist, dekorativen Zone (16') ausgewählt ist, und dass das zweite Glaselement (1') eventuell eine dunkle, das heißt nicht leuchtende Zone (15), sogenannte zweite dunkle Zone, umfasst, wobei die zweite dunkle Zone bevorzugt gegenüber der ersten dunklen Zone (15) liegt, insbesondere benachbart zu der eventuellen zweiten leuchtenden Zone, die aus einer reflektierenden Zone, die einen Spiegel (16) bildet, einer durchsichtigen Zone, einer insbesondere durch Texturierung des zweiten Glaselements durchscheinenden Zone (17), einer durch eine undurchsichtige und/oder farbige Beschichtung dekorativen Zone (16') und/oder durch das zweite Glaselement, das in der Masse gefärbt ist, ausgewählt ist.

3. Leuchtende Mehrfachverglasung (400, 500, 600, 700) nach einem der vorhergehenden Ansprüche, **dadurch gekennzeichnet, dass** der Reflektor (5, 50) Folgendes umfasst:
- eine erste Reflexionsgrenzzone der abgegebenen Strahlen (A), insbesondere ein erstes Ende des Reflektors, die einen Winkel α1 mit der oder den hauptsächlichen Emissionsrichtungen bildet, wobei die Ausbreitung des ersten Streumittels (11') derart ist, dass der Hauptteil, ja sogar mindestens 80 %, der seitlich genannten Strahlen über α1 hinaus und in Richtung der ersten Seite (11) von dem ersten Streumittel (11') gestreut werden,
- oder die Ausbreitung der zentralen Oberfläche (50) und der reflektierenden seitlichen Oberfläche (53', 53) derart ist, dass der Hauptteil, ja sogar mindestens 80 % der Strahlen, in Richtung der dritten Seite zu dem ersten Streumittel (11') reflektiert werden.

4. Leuchtende Mehrfachverglasung (400, 500, 600, 700) nach einem der vorhergehenden Ansprüche, **dadurch gekennzeichnet, dass** das erste Streumittel (11') zu der ersten Seite (11) gehört, und/oder das eventuelle zweite Streumittel (13') zu der dritten Seite (11) gehört, und das erste Streumittel und/das eventuelle zweite Streumittel bevorzugt durch Oberflächentexturierung des ersten oder zweiten Glaselements, insbesondere Sandstrahlen, Ätzen, Abrasion oder Hinzufügen eines streuenden Elements, insbesondere in Schichtform, gebildet ist.

5. Leuchtende Mehrfachverglasung (400, 500, 600, 700) nach einem der vorhergehenden Ansprüche, **dadurch gekennzeichnet, dass** für die Gruppen von Dioden (3) der Halbwinkel auf halber Höhe mindestens 50°, bevorzugt 60°, ja sogar mindestens 70° beträgt.

6. Leuchtende Mehrfachverglasung (400, 500, 600, 700) nach einem der vorhergehenden Ansprüche, **dadurch gekennzeichnet, dass** die Leistung jeder Diode der Gruppe (3) kleiner ist als 1 W, insbesondere kleiner als 0,5 W und, wobei die Gruppe von Dioden auf dem oder den Sockeln (30) mit Gesamtlänge L0 in Meter ausgedrückt verteilt ist, wobei die Gesamtleistung der Gruppe in Watt ausgedrückt kleiner ist als 30 [W/m] x L0 [m].

7. Leuchtende Mehrfachverglasung (100, 200, 300, 310,400, 500, 600, 700) nach einem der vorhergehenden Ansprüche, **dadurch gekennzeichnet, dass** der Sockel (30) eine freie streuende Oberfläche (57) um die Gruppe von Dioden trägt, insbesondere einen Lack oder einen Anstrich.

8. Leuchtende Mehrfachverglasung (400, 500, 600, 700) nach einem der vorhergehenden Ansprüche, **dadurch gekennzeichnet, dass** der Sockel (30) fest mit dem Umfangs-Abstandhalter (2) verbunden ist, wobei sich die erste leuchtende Zone (11') entlang eines Rands der ersten Seite (11) erstreckt, die sich entlang eines Rands der dritten Seite (13) erstreckt, oder dass der Sockel (30) fest mit einem Klotz (2') in dem Innenraum, insbesondere einem zusätzlichen Abstandhalter, fest verbunden ist.

9. Leuchtende Mehrfachverglasung (400, 500, 600, 700) nach einem der vorhergehenden Ansprüche, **dadurch gekennzeichnet, dass** der Sockel (30) metallisch ist und auf dem Abstandhalter (2), der metallisch ausgewählt ist, oder auf einem metallischen Klotz (2') in dem Innenraum oder auf einem metallischen Teil des Teils (54) des Reflektors zwischen dem Sockel und dem Abstandhalter oder dem Klotz befestigt ist, wobei die Befestigung eventuell anhand eines Mittels zum wärmeleitfähigen festen Verbinden (31), insbesondere anhand eines Klebstoffs oder eines Klebebands erfolgt, und/oder dass thermisches Fett zwischen dem Sockel und dem Abstandhalter oder dem Klotz oder dem metallischen Teil (54) des Reflektors eingefügt ist.

10. Leuchtende Mehrfachverglasung (400, 500, 600, 700) nach einem der vorhergehenden Ansprüche, **dadurch gekennzeichnet, dass** sich der Reflektor (5) eventuell über die zentrale Oberfläche (50) hinaus erstreckt, bis er mit der ersten Seite (11) in Berührung tritt, oder bis maximal ein Spiel von weniger als 1 mm zu der ersten Seite belassen ist.

11. Leuchtende Mehrfachverglasung (400, 500, 600, 700) nach einem der vorhergehenden Ansprüche, **dadurch gekennzeichnet, dass** das Teil, das zu dem Reflektor gehört oder ihn sogar bildet, metallisiert oder metallisch ist, insbesondere aus eloxiertem Aluminium, und bevorzugt, dass das Teil, das zu dem Reflektor gehört oder ihn sogar bildet,
- eine Platte, eventuell mit einer oder mehreren Falten oder Biegung(en) mit Stärke kleiner oder gleich 3 mm ja sogar 1 mm ist, und/oder
- ein hohles oder massives Teil mit mindestens einer Auflageoberfläche, ja sogar Befestigungsoberfläche auf der dritten Seite und/oder auf der ersten Seite ist.

12. Leuchtende Mehrfachverglasung (400, 500, 600, 700) nach einem der vorhergehenden Ansprüche, **dadurch gekennzeichnet, dass** die zentrale Oberfläche einen spitzen Winkel zu 20° bis 60°, insbesondere 30 bis 50° in Bezug auf die erste Seite bildet.

13. Leuchtende Mehrfachverglasung (400, 500, 600, 700) nach einem der vorhergehenden Ansprüche, **dadurch gekennzeichnet, dass** die vertikale Projektion auf der ersten Seite und die vertikale Projektion auf der dritten Seite mindestens der zentralen Oberfläche jeweils kleiner oder gleich 3 mm ist.

14. Leuchtende Mehrfachverglasung (600) nach einem der vorhergehenden Ansprüche, **dadurch gekennzeichnet, dass** sich der Reflektor (5) seitlich über die zentrale Oberfläche (50) hinaus zu der ersten Seite erstreckt und eine andere reflektierende seitliche Zone (51') bildet, die von der ersten Seite mit einem gebogenen schrägen Ende (55) zu der Richtung, die zu den Dioden entgegengesetzt ist, beabstandet ist.

15. Leuchtende Mehrfachverglasung (600) nach einem der vorhergehenden Ansprüche, **dadurch gekennzeichnet, dass** das Teil, das Teil des Reflektors (5) ist oder ihn sogar bildet, Folgendes umfasst:
- den ersten schrägen Flügel (50), der die zentrale Oberfläche und die seitliche reflektierende Oberfläche umfasst,
- verlängert durch einen zweiten flachen Flügel (54, 56), insbesondere zur Befestigung zwischen dem Abstandhalter (2) und einem Klotz in dem Innenraum und zwischen der dritten Seite oder auch auf dem Abstandhalter oder einem Klotz in dem Innenraum, und dass der zweite Flügel insbesondere metallisch und unter dem Sockel (30) zur Wärmeableitung ist.

16. Leuchtende Mehrfachverglasung (600) nach einem der vorhergehenden Ansprüche, **dadurch gekennzeichnet, dass** der andere Flügel auf der dritten Seite ist und durch Kleben an der dritten Seite befestigt ist.

17. Leuchtende Mehrfachverglasung (400, 500, 600, 700) nach einem der vorhergehenden Ansprüche, **dadurch gekennzeichnet, dass** die Mehrfachverglasung eine doppelte Verglasung oder eine Vakuum-Verglasung ist, insbesondere mit einem Umfangs-Abdichtsystem, bevorzugt zwischen der ersten und der dritten Seite, dass der Abstandhalter ein Rahmen ist, der eventuell ein trocknendes Mittel aufnimmt.

18. Leuchtende Mehrfachverglasung (400, 500, 600, 700) nach einem der vorhergehenden Ansprüche, **dadurch gekennzeichnet, dass** sie eine dekorative Beleuchtung, Architekturbeleuchtung, Signalgebungsbeleuchtung oder Anzeigebeleuchtung bildet.

19. Anwendung der leuchtenden Mehrfachverglasung (400, 500, 600, 700) nach einem der vorhergehenden Ansprüche
- auf eine Gebäudeverglasung, wie eine Leuchtfassade, ein leuchtendes Fenster, eine Deckenleuchte, eine leuchtende Bodenplatte oder Wandplatte, eine leuchtende verglaste Tür, eine Leuchtwand, eine Treppenstufe,
- auf ein Transportfahrzeug, als leuchtende Seitenscheibe oder ein leuchtendes verglastes Dach oder ein leuchtendes Fenster, eine leuchtende verglaste Tür, insbesondere für den öffentlichen Verkehr, Bahn, U-Bahn, Straßenbahn, Bus oder Wasserfahrzeug oder Luftfahrzeug (Flugzeug),
- auf Straßen- oder Stadtbeleuchtung,
- auf eine Verglasung für Stadtmöbel, wie ein leuchtender verglaster Teil eines Buswartehäuschens, eines Geländers, eines Aufstellers, einer Vitrine, eines Regalelements, eines Glashauses,
- auf eine Verglasung zur Innenausstattung, wie eine leuchtende Badezimmerwand, ein leuchtender Spiegel, ein leuchtender verglaster Teil eines Möbels,
- auf einen verglasten Teil, insbesondere eine Tür, ein verglastes Regal, einen Deckel, eine gekühlte Haushalts- oder professionelle Ausstattung.

## Claims

1. A luminous multiple glazing unit (400, 500, 600, 700) comprises:
- a first flat glass element (1) made of mineral or organic glass, with first and second main faces (11, 12);
- a second flat glass element (1') made of mineral or organic glass, with a main face, called the third face (13), lying opposite the first face, and another main face, called the fourth face (14);
- the first and second glass elements being securely fastened to and spaced apart from each other;
- an internal space (20), at least between the first and third faces, this space especially being evacuated or filled with a gas;
- a spacer (2) separating said first and second glass elements, at the periphery of the glazing unit;
- at least one group of light-emitting diodes located in the internal space, the diodes being mounted on one or more mountings (30);
- the diodes (3) in said group each having a given main emission direction that is substantially parallel the first face (11);
- a reflector (5) that reflects the light emitted by said group of diodes (5), the reflector comprising a part fixed to the glazing unit in the internal space; and
- a first luminous zone associated with the first glass element, the light originating from said group of diodes,
said part of the reflector (5) has a reflective area (50) that makes an oblique angle to the first face **characterized in that** said reflective area (50) is central, this reflective area being able to reflect, in a first position, and with an lateral reflective area (53, 51', 53'), what are called central rays of said group of diodes, including the main emission direction or the main emission directions, and forming at least 50% of the total flux emitted by the diodes in said group, these central rays being reflected onto the first luminous zone, said first luminous zone being provided with a first means (11') for scattering light, which means receives the central rays, the reflector (5), optionally beyond the central area (50), extends until it makes contact with the first face (11) or until there is a maximum play between the first face and the reflector of less than 5 mm
and the part forming a region of or forming the reflector (5) comprises:
- a first flange comprising the central oblique area (50) that is flat or concave toward the diodes and a lateral reflective zone (51'),
- prolonged by another flange (53), flat or concave toward the diodes, flange (53) spaced apart from or on the third face.

2. The luminous multiple glazing unit (400, 500, 600, 700) as claimed in one of the preceding claims, **characterized in that** the first luminous zone (11') covers most of the area of the first glass element, at least one, especially adjacent, first dim, i.e. nonluminous, zone (15) being left in the first glass element, which dim zone is chosen from a reflective zone forming a mirror (16), a transparent zone, a translucent zone (17) especially obtained by texturing the first glass element, and a decorative zone (16') decorated with an opaque and/or colored coating and/or given a color by tinting the thickness of the first glass element, and optionally **in that** the second glass element (1') comprises a dim, i.e. nonluminous, zone (15) called the second dim zone, which is preferably opposite the first dim zone (15), and especially adjacent the optional second luminous zone, which second dim zone is chosen from a reflective zone forming a mirror (16), a transparent zone, a translucent zone (17) especially obtained by texturing the second glass element, and a decorative zone (16') decorated with an opaque and/or colored coating or by tinting the thickness of the second glass element.

3. The luminous multiple glazing unit (400, 500, 600, 700) as claimed in either of the preceding claims, **characterized in that** the reflector (5, 50) comprises:
- a first zone (A) bounding reflection of the emitted rays, especially a first end of the reflector, making an angle α1 to the main emission direction or directions, the first scattering means (11') extending such that most, even at least 80%, of what are called lateral rays, exceeding the angle α1, and emitted toward the first face (11), are scattered by the first scattering means (11');
- or, the extent of the central area (50) and the lateral reflective area (53', 53) being such that most, even at least 80%, of the rays emitted toward the third face are reflected toward the first scattering means (11').

4. The luminous multiple glazing unit (400, 500, 600, 700) as claimed in one of the preceding claims, **characterized in that** the first scattering means (11') is associated with the first face (11) and/or the optional second scattering means (13') is associated with the third face (11) and preferably the second scattering means and/or the optional second scattering means is formed by texturing the surface of both or one of the first and second glass elements, especially by sand-blasting, acid etching or abrading, or by adding a scattering element, especially a layer.

5. The luminous multiple glazing unit (400, 500, 600, 700) as claimed in one of the preceding claims, **characterized in that**, for the group of diodes (3), the full width at half-maximum is at least 50°, preferably 60° and even at least 70°.

6. The luminous multiple glazing unit (400, 500, 600, 700) as claimed in one of the preceding claims, **characterized in that** the power of each diode (3) in said group is lower than 1 W, especially lower than 0.5 W and, the group of diodes being distributed over a mounting or mountings (30) having a total length L0 expressed in meters, the total power expressed in watts of said group is less than 30 [W/m] × L0 [m].

7. The luminous multiple glazing unit (400, 500, 600, 700) as claimed in one of the preceding claims, **characterized in that** the mounting (30) comprises a free scattering area (57) encircling the group of diodes, especially a lacquer or paint.

8. The luminous multiple glazing unit (400, 500, 600, 700) as claimed in one of the preceding claims, **characterized in that** the mounting (30) is securely fastened to the peripheral spacer (2), the first luminous zone (11') extending along an edge of the first face (11) extending along an edge of the third face (13) or **in that** the mounting (30) is securely fastened to a pad (2') in the internal space, especially an additional spacer.

9. The luminous multiple glazing unit (400, 500, 600, 700) as claimed in one of the preceding claims, **characterized in that** the mounting (30) is made of metal and fixed to the spacer (2) that is chosen to be made of metal, or to a metal pad (2') located in the internal space, or to a metal region of the part (54) of the reflector between the mounting and the spacer or pad, the mounting possibly being fixed by a thermally conductive fixing means (31), especially an adhesive or adhesive tape, and/or **in that** thermal paste is placed intermediate between the mounting and the spacer or pad or metal region (54) of the reflector.

10. The luminous multiple glazing unit (400, 500, 600, 700) as claimed in one of the preceding claims, **characterized in that** the reflector (5), optionally beyond the central area (50), extends until it makes contact with the first face (11) or until there is a maximum play between the first face and the reflector of less than 1 mm.

11. The luminous multiple glazing unit (400, 500, 600, 700) as claimed in one of the preceding claims, **characterized in that** the part forming a region of or forming the reflector is metalized or made of metal and especially of anodized aluminum and preferably **in that** the part forming a region of or forming the reflector is:
- a plate that is optionally folded or curved one or more times and that is 3 mm or less, even 1 mm or less, in thickness; and/or
- a hollow or solid part with at least one face that presses against or is even fastened to the third face and/or to the first face.

12. The luminous multiple glazing unit (400, 500, 600, 700) as claimed in one of the preceding claims, **characterized in that** the central area makes an acute angle of 20° to 60°, especially of 30 to 50°, to the first face.

13. The luminous multiple glazing unit (400, 500, 600, 700) as claimed in one of the preceding claims, **characterized in that** the vertical projection onto the first face and the vertical projection onto the third face of at least the central area are both 3 mm or less.

14. The luminous multiple glazing unit (600) as claimed in one of the preceding claims, **characterized in that**, the reflector (5) extends laterally beyond the central area (50) toward the first face and forms another lateral reflective zone (51') that is spaced apart from the first face with an oblique end (55) that is curved away from the diodes.

15. The luminous multiple glazing unit (600) as claimed in one of the preceding claims, **characterized in that**, the part forming a region of or forming the reflector (5) comprises:
- a first oblique flange (50) comprising the central area and optionally the lateral reflective area,
- extended by a second flat flange (54, 56), especially for fastening, located between the spacer (2) or a pad in the internal space and the third face or even located on the spacer or a pad in the internal space, the second flange especially being made of metal and being located under the mounting (30) to enable dissipation of heat.

16. The luminous multiple glazing unit (600) as claimed in one of the preceding claims, **characterized in that**, said anotherflange (53) is on the third face, and fastening by adhesive bonding to the third face fastened.

17. The luminous multiple glazing unit (400, 500, 600, 700) as claimed in one of the preceding claims, **characterized in that** the multiple glazing unit is a double glazing unit or a vacuum glazing unit especially with a peripheral sealing system preferably located between the first and third faces, the spacer forming a frame that optionally contains a desiccant.

18. The luminous multiple glazing unit (400, 500, 600, 700) as claimed in one of the preceding claims, **characterized in that** it is used to produce decorative illumination, architectural illumination or illumination for signs or displays.

19. An application of the luminous multiple glazing unit (400, 500, 600, 700) as claimed in one of the preceding claims
- as an architectural glazing unit such as a luminous panel, a luminous window, a ceiling light, a luminous floor or wall tile, a luminous glazed door, a luminous partition, a stairway step;
- in a mode of transportation as a luminous side window or a luminous sunroof or a luminous window or a luminous glazed door especially in public transport, trains, subway cars, tramway trams, buses or waterborne or airborne vehicles (airplanes);
- to lighting roads or urban spaces;
- as a glazing unit for urban furniture such as a luminous glazed part of a bus shelter, a balustrade, a counter, a store window, a shelving element, a greenhouse;
- as a glazing unit for interior design, such as a luminous wall in a bathroom, a luminous mirror, as a luminous glazed part of a piece of furniture; and
- as a glass element, especially of a door, glass shelving, a cover or of domestic or professional refrigerators.
